# EUROPEAN PATENT SPECIFICATION

(11) **EP 3 672 201 B1**
(45) Date of publication and mention of the grant of the patent: **09.06.2021**
(21) Application number: 18214245.5
(22) Date of filing: 19.12.2018
(51) Int. Cl.: H04L 29/08, G06F 9/00, H04W 76/50, H04W 4/90

(54) **DEDICATED ECALL-APPLICATION PROGRAMMING INTERFACE**
PROGRAMMIERSCHNITTSTELLE FÜR DEDIZIERTE ECALL-ANWENDUNG
INTERFACE DE PROGRAMMATION D'APPLICATION E-CALL DÉDIÉE

(43) Date of publication of application: 24.06.2020
(73) Proprietor: Valeo Comfort and Driving Assistance, 94046 Créteil Cedex (FR)
(72) Inventor: LEVIHN, Jens, 61381 Friedrichsdorf (DE); GROEBEL, Vincent, 61381 Friedrichsdorf (DE); WELLENS, Matthias, 61381 Friedrichsdorf (DE)
(74) Representative: Delaval, Guillaume Laurent

(56) References cited:
- EP-A1- 1 058 220
- US-B2- 7 058 898

## Description

### FIELD OF THE INVENTION

The present disclosure relates to a telematics unit and to a method for the operation of a telematics unit.

### BACKGROUND OF THE INVENTION

Telematic platforms for automotive use often offer Application Programming Interfaces (APIs) or Application/Software Development Kits (ADKs/SDKs). An example is the Sierra Wireless Legato system (http://legato.io/).

EP 1 058 220 A1 discloses a system comprises one or more vehicle applications with a number of different communication channels to allow the applications to communicate with the outside world. A central communications platform links together one or more of the applications to one or more of the communications channels.

In particular, for accessing cellular modem functionality there is usually a hardware abstraction layer (HAL) providing a common interface to different hardware solutions. Typical examples are RIL (Radio interface Layer) for Android and related Linux-based operating systems, NDIS for Windows-based systems, or subsets of above introduced ADKs/SDKs.

However, the interfaces and their implementations always consist of a single complex block in order to streamline versioning, maintenance, testing etc. Even parts of the interfaces that rarely change still belong to an overall system that is dynamic and will often be updated in order to address the quick progress in wireless communication or communication technology in general.

These interfaces often also provide features to control the access each application is allowed to execute or to give priority to certain applications. However, the methods applied in this context are usually rather complicated and challenging to maintain and to verify due to the feature-richness of the interface itself.

Beside feature rich OEM specific telematic applications today's emergency call functions required by law - for example EU-eCall, ERA GLONASS, PSAP eCall - are also usually implemented using the same Application Programming Interface. Legally required emergency call functions require an official certification. Therefore, the used API is also relevant for the certification. Updates of the API may require a recertification of the legal required eCall functions.

Disadvantages of such highly integrated solutions are:
- Maturity of stable subcomponents does not improve as quickly as possible due to more frequent changes to general API characteristics;
- Maintenance and verification is challenging due to high frequency of changes and improvements;
- If the API is relevant for certification the whole API solution needs to be certified (or delta-certified) although the parts that are relevant for certification are only a subset or may not have changed at all;
- Verifying the priority control of the API is difficult and time-consuming due to its feature-richness;
- Later time-to-market due to the above reasons that complicate the development, verification and certification process.

### SUMMARY OF THE INVENTION

It is an object of the invention to propose a telematics unit for the operation of a telematics unit by which it is possible to update the application programming interface without losing a certification of the legal required eCall functions.

According to the invention the telematics unit is specified in independent claim 1.

Such a division of the application programming interface allows to update the telematics unit but to exclude the first application from updates in order to keep the certification of the required functions of the first application. This means that the cost for updates of the telematics unit will be smaller and this means that the risk that a failed update will occur will be smaller since updates for the first application will be the exception. The use of a first and a second interface allows to certify each interface independent from the other interface. Additionally the use of two interfaces makes it possible to separate the applications for example by containers or other mechanisms for isolation. The use of two interfaces allows an independent examination or verification or recertification of both interfaces in different ways or at different times. Due to the use of two interfaces the first interface can be reduced in its functionality to vital functions and the second interface can be equipped regularly with additional functionalities without provoking a loss of the certification for first interface.

It is provided that the telematics unit comprises an application framework which is switched between the application programming interface and the hardware components. This allows an application authentication process which prevents that applications of lower priority can upgrade themselves to higher priority by accessing the eCall-interface.

It is also provided that the first interface is an eCall-interface and the second interface is an app-interface or that the first interface is a vehicle-tracking-interface and the second interface is an app-interface. Especially for eCall applications it is advantageous to have an eCall-interface that can be exempted from updates which are necessary for any other, new application. This safes costs for a new certification and avoids the occurring of any technical difficulties which may be caused by an update.

According to the invention a method for the operation of a telematics unit according to claim 1 or 2 comprises the steps,
- that each application is assigned either to a first group of applications or to a second group of applications,
- that to the applications of the first group priority access to all hardware components is granted. Such a method ensures that there is no delay in a case that an application of the first group needs priority.

It is provided that the first group comprises either only legislative eCall applications or only vehicle-tracking-applications or legislative eCall applications and vehicle-tracking-applications and that the second group comprises all other application. It is advantageous to assemble the first group only of applications to which priority shall be granted. A vehicle-tracking-application and a vehicle-tracking-interface are for example compliant to Thatcham or to GNSS Shifting for China.

Finally it is provided that the priority access is controlled by an eCall-interface for each hardware component. Such an architecture allows to guarantee priority to the applications of the first group of applications to any hardware component.

The invention proposes to separate the APIs of the state-of-the-art into two separate interfaces. Therefore it is proposed to split the API into an app-interface - called App-interface - and into an eCall-interface - called eCall-interface. If the API of the HAL is separated into two main components namely the eCall-interface and the app-interface each can be optimized to address particular requirements:
The App-interface can be optimized to:
   - enable high frequency of updates addressing the technology advances and
   - offer a lot of functionality providing the needed flexibility to applications and addressing also rare use cases.

The eCall-interface can be optimized to:
- focus functionality on the minimum required for legal eCall operation (EU-eCall, ERA GLONASS, PSAP eCall, further possibly upcoming eCall legislation);
- keep the interface stable and prevent frequent updates;
- lower the need for re-certification due to increased platform stability;
- enable better coverage and higher maturity of the verification suite;
- enable continuous improvement of platform maturity for the sensitive and safety-relevant eCall function
- lower the effort for interface maintenance and verification.

The HAL will always grant priority to applications using the eCall-interface. An optional application authentication process prevents that applications of lower priority can upgrade themselves to higher priority by accessing the eCall-interface. By introducing the split between App-interface and eCall-interface giving priority to applications using the eCall-interface is also simpler compared to a more powerful integrated API. The above advantages get more important when considering the omnipresence of over-the-air software update functionality. If security holes need to be fixed using such updates the time it takes to implement the update becomes more relevant. In this context, it is of special importance to prevent time-consuming discussions on possible need for re-certification efforts or even the re-certification itself that may postpone the point in time when the over-the-air update process can be started leaving vulnerable systems out in the field.

In this document it is referred to eCall-interface as the group of possibly multiple eCall-interfaces focusing on positioning, audio, radio, or further technologies. The separation into eCall-interface and App-interface is not limited to the named three examples but applies to arbitrary technologies that are relevant for legislative eCalls currently defined or future additions.

Similarly, HAL is used as term describing the complete set of interfaces abstracting hardware-specific characteristics to a set of generic interfaces independent of specific hardware implementations. The described improvement can be implemented in almost arbitrary operating system environments including but not limited to embedded Linux.

In the sense of the invention any additional application is an application which is not a legislative eCall application.

The abbreviation "eCall" stand for "emergency call" and means an automatically triggered call via a mobile phone network in order to bring rapid assistance to motorists involved in a collision.

### BRIEF DESCRIPTION OF THE DRAWINGS

The foregoing and other features and advantages of the present invention will become apparent to those skilled in the art to which the present invention relates upon reading the following description with reference to the accompanying drawing, in which:

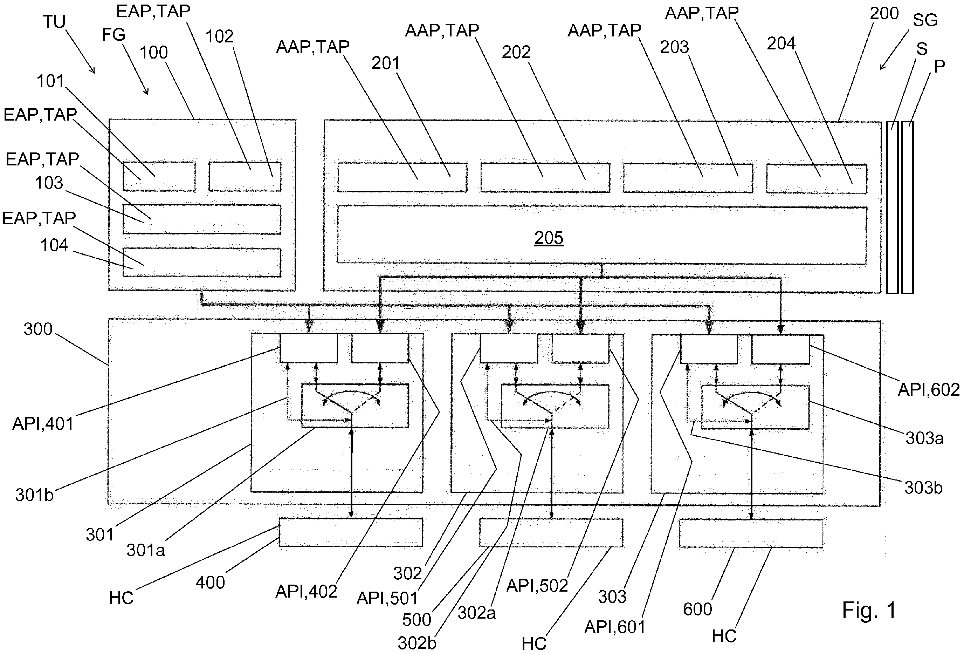

- Figure 1: shows a schematic example of an architecture of an inventive telematics unit TU.

### DETAILED DESCRIPTION OF THE INVENTION

Figure 1 shows a schematic example of an architecture of an inventive telematics unit TU. The upper part of figure 1 shows several telematics applications TAP which are divided in a first group FG or a first Library 100 of eCall applications EAP and in a second group SG or a second library 200 of additional, non-legislative application AAP. The lower part of figure 1 shows a hardware abstraction layer 300, a positioning hardware 400, an audio hardware 500 and a modem hardware 600. Additionally the upper part of figure 1 shows a storage device S of the telematics unit TU and a processor P of the telematics unit TU.

The library 100 of eCall applications 100 comprises an EU eCall application 101, a PSAP eCall application 102, an ERA GLONASS eCall application 103 and optionally additional legislative eCalls applications 104.

The library 200 for additional, non-legislative applications comprises a proprietary eCall application 201, remote services application 202 and a breakdown call application 203 and optionally additional applications 204. Optionally the library 200 comprises an application framework 205 in order to control the access of the applications 201 to 204 to the hardware abstraction layer 300.

The hardware abstraction layer 300 comprises a positioning abstraction layer 301, an audio abstraction layer 302 and a radio interface layer 303.

The positioning abstraction layer 301 is assigned to the positioning hardware 400. The audio abstraction layer 302 is assigned to the audio hardware 500 and the radio interface layer 303 is assigned to the modem hardware 600.

The applications TAP are connected to the hardware components HC by application programming interfaces API

The eCall library 100 with its eCall applications 101-104 is connected to different hardware components HC, wherein it is connected via an eCall-interface 401 to the positioning hardware 400 and wherein it is connected via an eCall-interface 501 to the audio hardware 500 and wherein it is connected via an eCall-interface 601 to a modem hardware 600.

The non-legislative library 200 with its additional applications 201-204 is connected to an app-interface 402 of the positioning hardware 400 and to an app-interface 502 of the audio hardware 500 and to an app-interface 602 of a modem hardware 600.

The eCall-interfaces 401, 501, 601 and the app-interfaces 402, 502, 602 are application programming interfaces API.

Each of the abstraction layers 301, 302, 303 comprises a priority control 301a, 302a, 303a wherein each eCall-interface 401, 501, 601 can gain control over the priority control 301a, 302a, 303a in the case of the necessity of an eCall via a control connection 301b, 302b, 303b.

According to the invention the existing hardware abstraction layer solutions such as above mentioned RIL will have to be separated in two parts. All functionality relevant for legal eCalls will move to the eCall-interface. Everything else will move to the App-interface. Functionality needed in both will need to be doubled. The hardware abstraction layer will further implement a clear priority management always giving priority to applications using the eCall-interface. Giving priority to the eCall-interface has been shown by adding a control connection between the interface and the priority control as part of the abstraction layer. If the eCall-interface is used by any authorized application priority will be automatically granted. ECall applications could also be implemented as standard application. However, the abstraction layer will not grant special priority to such proprietary eCall solutions. Typical examples will be eCall solutions that do not implement any legislation and that do not benefit from priority granted by the mobile network, either.

Any change to existing applications, additions of new applications, or extensions to the App-interface enabling new applications will all not impact the eCall-interface and the eCall applications enabling above listed advantages. Since the eCall-interface will hardly change the need for extending or adapting the API verification suite will also occur rarely enabling better coverage and higher maturity of the test suite.

### REFERENCE NUMERALS:

- TU: telematics unit

- 100: Library 100 of eCall applications
- 101: EU eCall application
- 102: PSAP eCall application
- 103: ERA GLONASS eCall application
- 104: additional legislative eCall application

- 200: library 200 of additional, non-legislative application
- 201: proprietary eCall application
- 202: remote services application
- 203: breakdown call application
- 204: additional application
- 205: application framework

- 300: a hardware abstraction layer
- 301: positioning abstraction layer
- 301a: priority control of 301
- 301b: control connection of 301
- 302: audio abstraction layer
- 302a: priority control of 302
- 302b: control connection of 302
- 303: radio interface layer
- 303c: priority control of 303
- 303b: control connection of 303

- 400: positioning hardware
- 401: eCall-interface
- 402: app-interface

- 500: audio hardware
- 501: eCall-interface
- 502: app-interface

- 600: modem hardware
- 601: eCall-interface
- 602: app-interface

- AAP: additional applications
- API: application programming interface
- EAP: eCall applications
- FG: first group of applications
- HC: hardware component
- P: processor
- S: storage device
- SG: second group of applications
- TAP: telematics application

## Claims

1. Telematics unit (TU), wherein the telematics unit (TU) comprises a processor (P) and a storage device (S) and comprises as further hardware components a positioning hardware (400) and an audio hardware (500) and a modem hardware (600),
- wherein the telematics unit (TU) comprises at least two telematic applications (TAP), including at least one eCall application and at least one further application,
- wherein the telematic applications (TAP) are connected *for an exchange of commands and of information* by an application programming interface (API) and hardware abstraction Layer (300)to the further hardware components (HC),
- wherein the application programming interface (API) is divided into a first interface (401; 501; 601) and a second interface (402; 502; 602),
- wherein the hardware abstraction layer comprises a positioning abstraction layer assigned to the positioning hardware, an audio abstraction layer assigned to the audio hardware and a radio interface layer assigned to the modem hardware,
- the at least one eCall application (EAP; 101, 201, 301, 401) is connected *for the exchange of commands and of information* via the first interface (401; 501; 601) with the positioning abstraction Layer (301) and with the audio abstraction layer (302) and with the radio interface layer (303) to the further hardware components (HC) of the telematics unit (TU) and
- wherein at least one further application (AAP) is connected *for the exchange of commands and of information* via second interface (402; 502; 602) with the positioning abstraction layer (301) and with the audio abstraction layer (302) to the further hardware components (HC) of the telematics unit (TU).

2. Telematics unit according to claim 1, wherein an application framework (205) is switched between the application programming interface (API) and the hardware components (HC).

3. Telematics unit according to claim 1 or 2, wherein the first interface is an eCall-interface and the second interface is an app-interface or
- the first interface is a vehicle-tracking-interface and the second interface is an app-interface.

## Patentansprüche

1. Telematikeinheit (TU), wobei die Telematikeinheit (TU) einen Prozessor (P) und eine Speichervorrichtung (S) umfasst und als weitere Hardware-Komponenten eine Positionierungs-Hardware (400), eine Audio-Hardware (500) und eine Modem-Hardware (600) umfasst,
- wobei die Telematikeinheit (TU) mindestens zwei Telematikanwendungen (TAP) umfasst, die mindestens eine eCall-Anwendung und mindestens eine weitere Anwendung enthalten,
- wobei die Telematikanwendungen (TAP) *für einen Austausch von Befehlen und Informationen* durch eine Anwendungsprogrammierungsschnittstelle (API) und eine Hardware-Abstraktionsschicht (300) mit den weiteren Hardware-Komponenten (HC) verbunden sind,
- wobei die Anwendungsprogrammierungsschnittstelle (API) in eine erste Schnittstelle (401; 501; 601) und eine zweite Schnittstelle (402; 502; 602) unterteilt ist,
- wobei die Hardware-Abstraktionsschicht eine Positionierungsabstraktionsschicht, die der Positionierungs-Hardware zugewiesen ist, eine Audioabstraktionsschicht, die der Audio-Hardware zugewiesen ist, und eine Funkschnittstellenschicht, die der Modem-Hardware zugewiesen ist, umfasst,
- wobei die mindestens eine eCall-Anwendung (EAP; 101, 201, 301, 401) *für den Austausch von Befehlen und Informationen* über die erste Schnittstelle (401; 501; 601) mit der Positionierungsabstraktionsschicht (301), mit der Audioabstraktionsschicht (302) und mit der Funkschnittstellenschicht (303) mit den weiteren Hardware-Komponenten (HC) der Telematikeinheit (TU) verbunden ist und
- wobei mindestens eine weitere Anwendung (AAP) *für den Austausch von Befehlen und Informationen* über die zweite Schnittstelle (402; 502; 602) mit der Positionierungsabstraktionsschicht (301) und mit der Audioabstraktionsschicht (302) mit den weiteren Hardware-Komponenten (HC) der Telematikeinheit (TU) verbunden ist.

2. Telematikeinheit nach Anspruch 1, wobei ein Anwendungsrahmen (205) zwischen der Anwendungsprogrammierungsschnittstelle (API) und den Hardware-Komponenten (HC) vermittelt wird.

3. Telematikeinheit nach Anspruch 1 oder 2, wobei die erste Schnittstelle eine eCall-Schnittstelle ist und die zweite Schnittstelle eine App-Schnittstelle ist oder
- die erste Schnittstelle eine Fahrzeugverfolgungsschnittstelle ist und die zweite Schnittstelle eine App-Schnittstelle ist.

## Revendications

1. Unité télématique (TU), où l'unité télématique (TU) comprend un processeur (P) et un dispositif de stockage (S), et comprend comme autres composants matériels un matériel de positionnement (400) et un matériel audio (500) et un matériel de type modem (600),
- où l'unité télématique (TU) comprend au moins deux applications télématiques (TAP), dont au moins une application de type « eCall » et au moins une autre application,
- où les applications télématiques (TAP) sont connectées pour un échange de commandes et d'informations par une interface de programmation d'application (API) et une couche d'abstraction matérielle (300) aux autres composants matériels (HC),
- où l'interface de programmation d'application (API) est divisée en une première interface (401 ; 501 ; 601) et une seconde interface (402 ; 502 ; 602),
- où la couche d'abstraction matérielle comprend une couche d'abstraction de positionnement assignée au matériel de positionnement, une couche d'abstraction audio assignée au matériel audio et une couche d'interface radio assignée au matériel de type modem,
- l'au moins une application de type « eCall » (EAP ; 101, 201, 301, 401) est connectée pour l'échange de commandes et d'informations par l'intermédiaire de la première interface (401 ; 501 ; 601) avec la couche d'abstraction de positionnement (301) et avec la couche d'abstraction audio (302) et avec la couche d'interface radio (303) aux autres composants matériels (HC) de l'unité télématique (TU), et
- où au moins une autre application (AAP) est connectée pour l'échange de commandes et d'informations par l'intermédiaire d'une seconde interface (402 ; 502 ; 602) avec la couche d'abstraction de positionnement (301) et avec la couche d'abstraction audio (302) aux autres composants matériels (HC) de l'unité télématique (TU) .

2. Unité télématique selon la revendication 1, dans laquelle un cadre d'application (205) est commuté entre l'interface de programmation d'application (API) et les composants matériels (HC).

3. Unité télématique selon la revendication 1 ou la revendication 2, dans laquelle la première interface est une interface « eCall » et la seconde interface est une interface d'application, ou
- la première interface est une interface de suivi de véhicule et la seconde interface est une interface d'application.
